# EUROPEAN PATENT SPECIFICATION

(11) **EP 3 287 566 B1**
(45) Date of publication and mention of the grant of the patent: **17.07.2019**
(21) Application number: 17188043.8
(22) Date of filing: 25.08.2017
(51) Int. Cl.: E03D 1/012

(54) **FLUSHING TANK WITH AN ADJUSTABLE WALL-MOUNTING DEVICE**
SPÜLKASTEN MIT EINSTELLBARER WANDMONTIERTER VORRICHTUNG
RÉSERVOIR DE RINÇAGE COMPORTANT UN DISPOSITIF DE FIXATION MURALE RÉGLABLE

(30) Priority: 26.08.2016 IT 201600087521
(43) Date of publication of application: 28.02.2018
(73) Proprietor: OLI - SISTEMAS SANITARIOS, S.A., 3800-314 Aveiro (PT)
(72) Inventor: FREITAS MACHADO, João Tiago, 3800-314 AVEIRO (PT)
(74) Representative: Cernuzzi, Daniele

(56) References cited:
- DE-A1- 1 609 269
- DE-U1- 8 717 828
- DE-U1- 29 507 431

## Description

The present invention relates to a flushing tank, in particular a concealed flushing tank (to be covered, in use, with an outer casing, for example made of ceramic), equipped with an adjustable wall-mounting device.

So-called concealed flushing tanks are known, which comprise an inner container housed in an outer covering casing, for example made of ceramic.

The outer casing serves as an aesthetic cover, while the inner container serves as a water tank and houses functional devices, such as a drain valve, a filling valve, etc.

There is a need to properly position and fasten the inner container. From the document DE 295 07 431 U1 a flushing tank is known the height of which can be adapted by shortening a distancing portion of the mounting assembly at a frangible portion.

It is an object of the present invention to provide a flushing tank with an adjustable wall-mounting device which, compared to the prior art solutions, is equally, and possibly more, simple and effective.

Therefore, the present invention relates to a flushing tank, in particular a concealed flushing tank, equipped with an adjustable wall-mounting device, as defined in essential terms in the appended claim 1 and, as regards its additional features, in the dependent claims.

The tank of the invention allows a particularly simple, effective and fast mounting.

The invention is further described in the following, non-limiting, implementation examples, with reference to the accompanying figures in which:
- Figure 1 is a front-top perspective view of a flushing tank with an adjustable wall-mounting device according to the invention;
- Figure 2 is a front-top perspective view, in enlarged scale and with parts removed for clarity, of a detail of the flushing tank of Figure 1;
- Figure 3 is a rear perspective view, with parts removed for clarity, of the flushing tank of Figure 1;
- Figure 4 is a front-top perspective view, in enlarged scale and with parts removed for clarity, of a further detail of the flushing tank of Figure 1;
- Figure 5 is a bottom view, in enlarged scale and with parts removed for clarity, of a further detail of the flushing tank of Figure 1;
- Figure 6 is a perspective view in enlarged scale of a component of the flushing tank of Figure 1, shown detached.

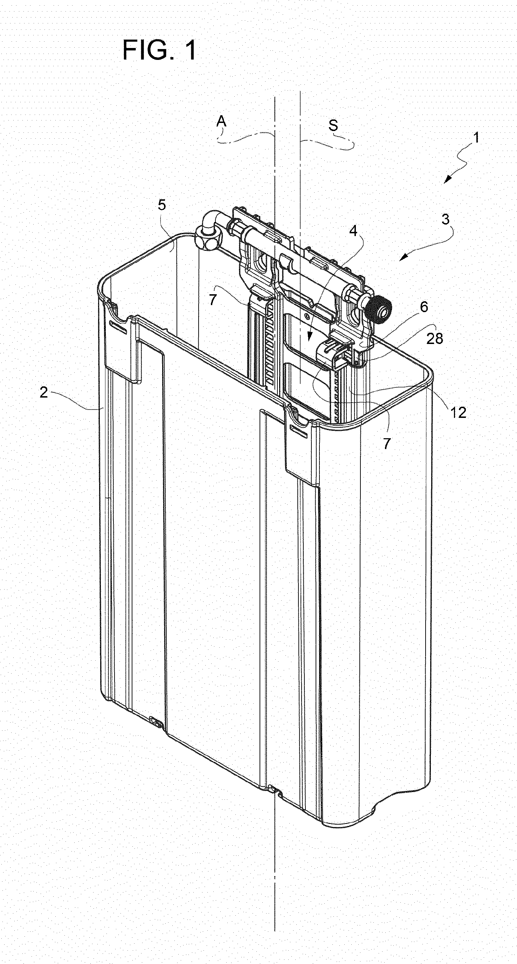

The numeral 1 in Figure 1 shows a flushing tank for a sanitary appliance. In particular, the tank 1 is a concealed flushing tank, intended to be at least partially covered, in use, by an outer covering casing closed with a lid, for example made of ceramic (not shown for simplicity).

The tank 1 extends along an axis A (vertical in use) and comprises a container 2, configured to contain water, and an adjustable wall-mounting device 3, which is used to fix the container 2 to a generic support wall.

The container 2 has a body, preferably made of a polymeric material, essentially shaped as a tank and extending along the axis A; in particular, the container 2 is open at the top and has a bottom wall transverse to the axis A (and provided with a drain hole connected to the drain valve) and a side wall closed in a loop around the axis A and projecting from the bottom wall.

The container 2 is configured so as to accommodate and support, in use, a drain valve and a supply valve, known per se and not shown for simplicity.

The device 3 comprises: a seat 4 formed on a wall 5 of the container 2; a mounting plate 6 insertable in the seat 4 and slidable in the seat 4; and at least one locking member 7 to lock the plate 6 in a selected position in the seat 4 and on the container 2.

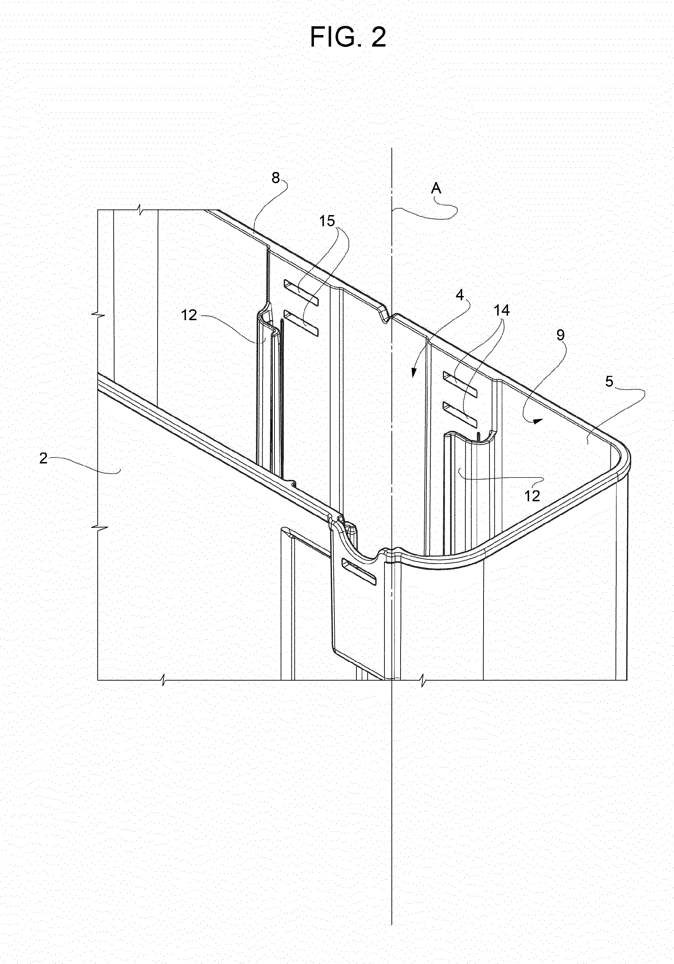

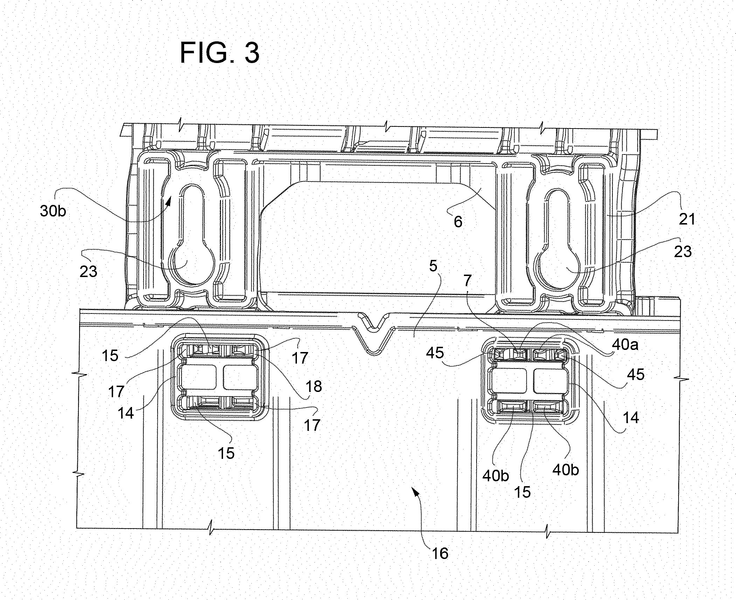

With reference also to Figures 2 and 3, the seat 4 is formed, for example, on a rear wall 5 of the container 2 at a top open end 8 of the container 2 and precisely on an inner face 9 (i.e. facing the inside of the container 2) of the wall 5.

The seat 4 has a pair of guides 12 parallel to one another and to the axis A.

For example, the guides 12 have a substantially C-shaped cross-section and are defined by respective longitudinal ridges projecting from the inner face 9 of the wall 5 and have respective longitudinal slots, parallel to the axis A, facing one another.

The guides 12 are open at the top, at the upper end 8, and closed at the bottom. In particular, each guide 12 extends between an upper longitudinal end, provided with an access opening, and a lower longitudinal end, closed by a bottom shoulder optionally defining an axial locking member for the plate 6 inserted in the seat 4.

The seat 4 is also provided with at least one hooking seat 14, formed on the wall 5 of the container 2 and shaped so as to receive the locking member 7. The hooking seat 14 is arranged behind the plate 6 when the plate 6 is housed in the seat 4, with the hooking seat 14 being formed on the wall 5 and the plate 6 being arranged in front of the wall 5 in the seat 4.

In particular, the wall 5 is provided with a pair of hooking seats 14, located above the upper ends of respective guides 12 and spaced laterally from one another (on opposite sides of the axis A).

For example, each hooking seat 14 comprises at least one slot 15 formed through the wall 5 and provided at the back (i.e. on an outer face 16, opposite to the inner face 9, of the wall 5) with at least one lateral ridge 17, for example defined by an undercut and having an anchoring surface 18 facing the outside of the container 2 and substantially parallel to the outer face 16 of the wall 5.

In the example shown, each fastening seat 14 comprises a pair of parallel slots 15, longitudinally elongated in a direction transverse to the axis A and vertically superimposed above one another (i.e. parallel to the axis A). Each slot 15 is provided at the back with a pair of lateral ridges 17 located at respective opposite longitudinal ends of the slot 15.

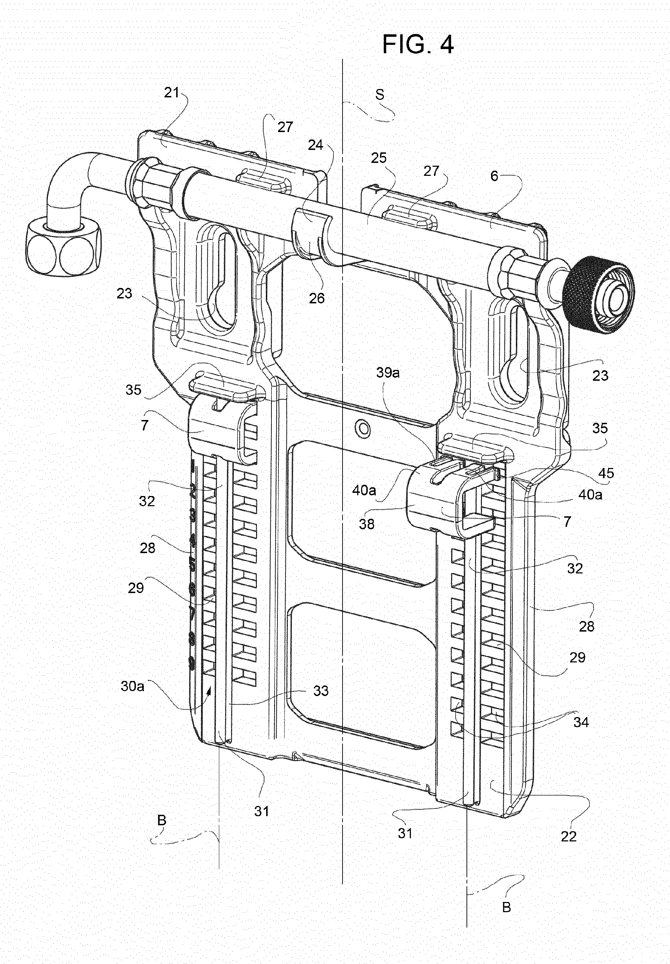

With specific reference to Figures 3 and 4, the plate 6 is formed in one piece, for example a monolithic plastic piece, separate with respect to the container 2 and preferably removable from the container 2.

The plate 6 comprises a fastening portion 21 for fixing to the support wall and to supports for functional elements, and a coupling portion 22, for insertion in the seat 4, which projects downward from the fastening portion 21.

The fastening portion 21 is provided with fastening elements 23, for example through slots for receiving respective fastening elements (screws or the like), known and not illustrated for simplicity.

The fastening portion 21 is also provided with at least one support 24 for a pipe 25 or other functional element, for example a supply pipe to be connected to an external network and to the supply valve housed in the tank 1 to bring water into the container 2.

In the example shown, the support 24 comprises a bracket 26, which receives and supports the pipe 25, and a pair of ridges 27 placed above the bracket 26 and laterally on opposite sides of the bracket 26 to lock the pipe 25 between the bracket 26 and the ridges 27.

It is however understood that the plate 6 can be provided with supports 24 other than the one described herein purely by way of example, as well as with multiple supports 24.

The coupling portion 22 is substantially flat and has a pair of side edges 28 shaped so as to be slidably inserted in respective guides 12.

The coupling portion 22 is provided with at least one series of through notches 29 arranged along an axis B parallel to the axis A and cooperating with a locking member 7.

In the non-limiting embodiment illustrated in the figures, the coupling portion 22 of the plate 6 has two series of notches 29 aligned along respective axes B parallel to each other and to the axis A; the two series of notches 29 are located near the respective edges 28.

Optionally, each series of notches 29 is associated with a graduated scale with numerical indications.

The notches 29, for example, are shaped as slots formed through the plate 6 between a front face 30a and a rear face 30b of the plate 6 and elongated transversely to the axis B.

Each series of notches 29 is associated with a longitudinal rib 31 projecting from the face 30a of the plate 6 and extending parallel to the series of notches 29 defining a rail 32 for the locking member 7.

In the example shown (but not necessarily), each rib 31 divides each notch 29 of the respective series of notches 29 into two adjacent notch portions 34 separate from the rib 31.

Preferably, the rib 31 has a rear narrowing 33 along a longitudinal edge joining the rib 31 to the face 30a of the plate 6.

A bracket 35 projecting from the front face 30a of the plate 6 is located above each series of notches 29.

The plate 6 rests with its rear face 30b on the inner face 9 of the container 2.

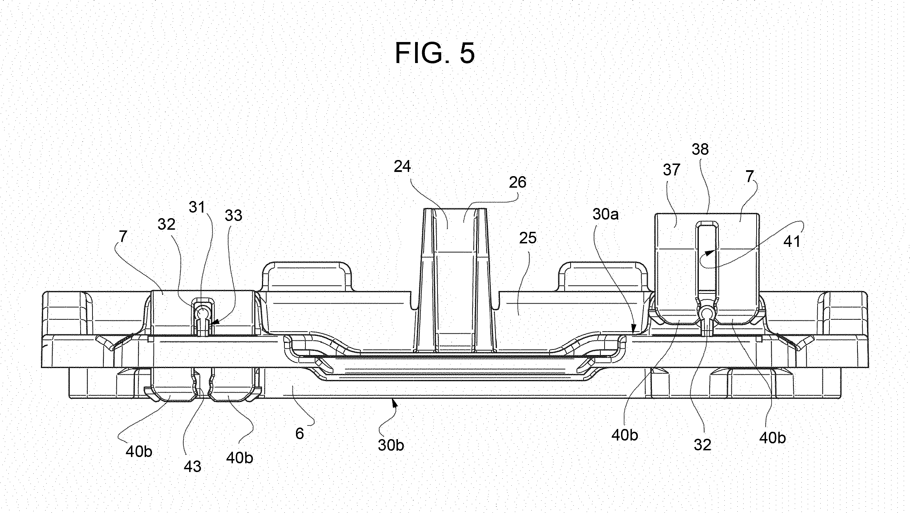

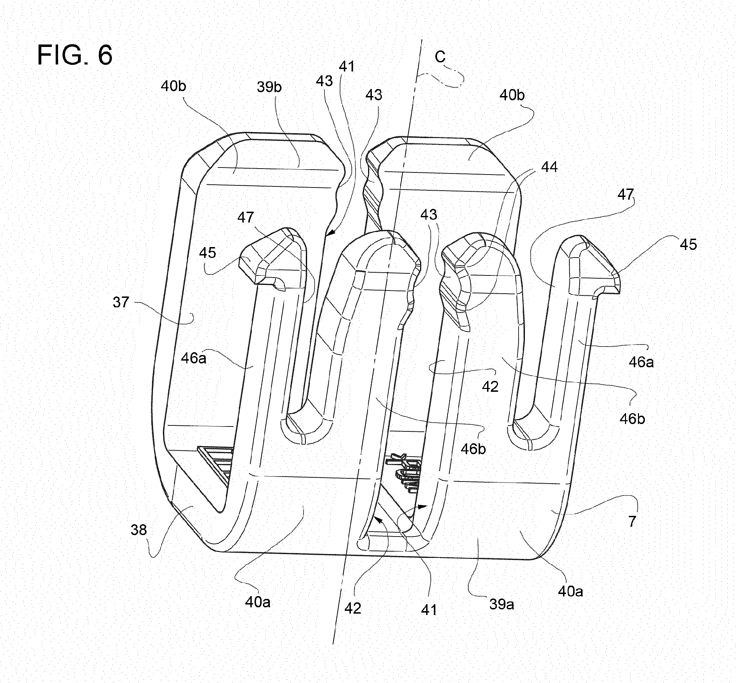

With specific reference to Figures 4-6, each locking member 7 comprises a body 37, preferably a monolithic body made of a polymeric material, in the form of a U-bolt and extending along an axis C.

The body 37 has a base portion 38 substantially orthogonal to the axis C, and at least one elastically deformable clip portion 39a shaped so as to clamp the rail 32 and fasten the locking member 7 to the rail 32.

In the example shown, the body 37 is substantially C-shaped and has two elastically deformable clip portions 39a, 39b projecting from the base portion 38 substantially parallel to one another and to the axis C, and spaced apart from one another.

In particular, the clip portions 39a, 39b comprise respective pairs of arms 40a, 40b arranged side-by-side and separated by respective longitudinal central slits 41 parallel to the axis C; the slits 41 are bounded by respective lateral opposite sides 42 of the respective arms 40a, 40b.

The slits 41 are aligned one over the other (superimposed), in a direction transverse to the axis C.

The arms 40a, 40b project longitudinally from respective corners of the base portion 38 substantially parallel to one another and to the axis C.

The arms 40a, 40b of the clip portions 39a, 39b form respective elastic jaws of the clip portions 39a, 39b.

The arms 40a, 40b of the clip portions 39a, 39b are provided, on the respective sides 42 facing one another and delimiting the central slits 41, with respective indentations 43 facing and aligned to each other, shaped so as to engage the narrowing 33 of the rail 32 defined by the rib 31.

In the example shown, each indentation 43 is longitudinally bounded by a pair of lateral, preferably rounded protuberances 44 longitudinally spaced apart and projecting into the central slits 41.

At least one clip portion 39a, 39b, for example the clip portion 39a (superior in use), is equipped with hooking teeth 45, in particular snap-on hooking teeth, shaped so as to engage a corresponding hooking seat 14 on the container 2.

In particular, the clip portion 39a has a pair of opposite teeth 45 projecting laterally and outwardly from respective arms 40a to cooperate in abutment with respective surfaces 18 of the ridges 17.

Preferably, as shown in Figures 4-6, the arms 40a are fork-shaped and the teeth 45 are carried by respective laterally outer prongs 46a of the arms 40a.

In greater detail, each arm 40a comprises two prongs 46a, 46b arranged side-by-side and separated by a secondary slit 47, parallel to the central slit 41 separating the arms 40a and optionally provided with a flared front pilot portion.

Each arm 40a has a first laterally outer prong 46a (i.e. farther from the central slit 41) carrying a tooth 45, and a second laterally inner prong 46b (i.e. closer to the central slit 41) carrying the indentation 43.

Preferably, the first prong 46a is thinner (i.e. has a smaller cross-section) compared to the second prong 46b.

The prongs 46a, 46b are flexible or elastic, being able to bend transversely with respect to the secondary slit 47 and/or the central slit 41. In particular, the prongs 46a, 46b of each arm 40a, 40b are flexible toward one another.

The prongs 46a are provided with respective opposite transverse, laterally outer teeth 45. In particular, each tooth 45 projects from a prong 46a in the opposite direction from that of the adjacent secondary slit 47 and has a front pilot portion (defined by a surface inclined with respect to the axis C and the axis A).

Each locking member 7 is shaped so that the arms 40a, 40b are insertable in a selected pair of notches 29 of the plate 6 and in the hooking seats 14 positioned on the container 2, and aligned with the selected pair of notches 29 behind the selected pair of notches 29. Each arm 40a, 40b, in particular, can be inserted in a notch portion 34.

Again with reference to Figure 1, the plate 6 is accommodated in the seat 4 with the edges 28 inserted in respective guides 12. The plate 6 is slidable in the seat 4, relative to the container 2, along a sliding axis S parallel to the axes B (and therefore also to the axis A), while it is constrained to the seat 4 and hence to the container 2 in the transverse (radial) direction with respect to the sliding axis S of the guides 12.

The locking members 7 are fitted on respective rails 32: each rail 32 is inserted in the central slit 41 of a locking member 7.

The locking members 7 slide parallel to the sliding axis S along the respective rails 32.

Each locking member 7 is also movable with respect to the plate 6 in the transverse/radial direction with respect to the sliding axis S along the respective axis C (orthogonal to the sliding axis S of the plate 6) for selectively assuming two operating positions: a free position (locking member 7 located on the right in Figures 1, 4 and 5), in which the locking members 7 hook on the respective rails 32 by means of the clip portions 39a, 39b, but do not engage the hooking seats 14 on the container 2; and a locked position (locking member 7 located on the left in Figures 1, 4 and 5), in which the arms 40a, 40b of the locking members 7 are arranged through respective notches 29 of the plate 6 and engage the hooking seats 14 on the container with the teeth 45.

In the free position, the locking member 7 is freely slidable on the rail 32, to which it is constrained through the clip portions 39a, 39b, which laterally clamp the rail 32 by engaging the narrowing 33. The locking member 7 protrudes from the plate 6 under a bracket 35, which is axially superimposed over the locking member 7.

In the locked position, the locking member 7 engages a selected pair of notches 29 by means of the arms 40a, 40b and also engages, by means of the teeth 45, the hooking seats 14 on the container 2, thereby fastening the plate 6 to the container 2. In particular, the arms 40a, 40b are arranged to pass through the selected pair of notches 29 of the plate 6; the hooking seats 14 of the container 2 are aligned with respective notches 29 of the selected pair of notches 29, and the arms 40a, 40b protrude from the notches 29 to engage the hooking seats 14.

In use, to fasten the tank 1 to the support wall in the desired position, the following approach is suitably adopted.

The tank 1 is placed in the desired position, for example resting on a water closet or other resting surface.

The plate 6 is accommodated in the seat 4 and the locking members 7 are in the free position, hooked to the rails 32.

The plate 6 is slidable in the seat 4 along the sliding axis S so as to axially change the position of the plate 6 with respect to the container 2.

The plate 6 is placed in a position of maximum extension with respect to the container 2, in which the plate 6 only engages the seat 4 with a lower end, but is mostly outside the seat 4. The plate 6 is kept in position by the locking members 7, which engage the rails 32.

The outer casing is then positioned, in particular by placing a lid of the casing on the container 2 and pushing the lid downwards up to the final position.

The lid of the casing pushes the plate 6 downwards up to the desired position with respect to the container 2 and the casing itself.

The plate 6 slides in the seat 4 and pushes downwards, via the brackets 35, the locking members 7, which slide along the rails 32, with the locking members 7 being in the free position.

Once the desired position is reached, the lid of the outer casing is removed and the plate 6 is locked on the container 2 by bringing the locking members 7 into the locked position. The arms 40a, 40b of each locking member 7 pass through a selected pair of notches 29 and engage the hooking seats 14 aligned behind said selected pair of notches 29.

The locking members 7 thus lock the plate 6 in the selected position in the seat 4 and on the container 2 and hence at a predetermined height along the sliding axis S.

At this point, the plate 6 is integrally coupled to the container 2 by means of the locking members 7.

The plate 6 is fixed to the support wall by means of the fastening elements 23 and the lid of the casing is put back on.

Lastly, it is understood that the flushing tank as described and illustrated herein can be subject to modifications and variations that do not depart from the scope of the accompanying claims.

## Claims

1. A flushing tank (1) for a sanitary appliance, comprising a container (2) and an adjustable mounting device (3) for fitting the container (2) onto a support wall; the device (3) comprising: a seat (4) formed on a wall (5) of the container (2); and a mounting plate (6) insertable in the seat (4); the flushing tank (1) being **characterised in that** the mounting plate (6) is slidable in the seat (4) along a sliding axis (S) so as to axially change the position of the plate (6) with respect to the container (2); and **in that** the device (3) comprises at least one locking member (7) shaped so as to engage together the plate (6) and a hooking seat (14) formed on the wall (5) of the container (2), thus locking the plate (6) in a selected position in the seat (4) and hence at a predetermined height along the sliding axis (S).

2. The flushing tank according to claim 1, wherein the plate (6) is provided with at least one series of notches (29) arranged along an axis (B) parallel to the sliding axis (S) and cooperating with the locking member (7); the locking member (7) having at least one arm (40a) protruding from a base portion (38) and shaped so as to be inserted through a selected notch (29) of the series of notches (29) and engage the hooking seat (14).

3. The flushing tank according to claim 2, wherein the notches (29) are shaped as slots formed through the plate (6) between a front face (30a) and a rear face (30b) of the plate (6) and elongated crosswise to said axis (B) along which the series of notches extend (29).

4. The flushing tank according to claim 2 or 3, wherein the plate (6) has two series of notches (29) aligned along respective axes (B) parallel to each other and to the sliding axis (S) and cooperating with respective locking members (7) which engage respective hooking seats (14) of the container (2).

5. The flushing tank according to any of the claims from 2 to 4, wherein the locking member (7) is provided with a pair of opposite hooking teeth (45), in particular snap-on hooking teeth, shaped so as to engage the hooking seat (14) on the container (2).

6. The flushing tank according to claim 5, wherein the teeth (45) project laterally and outwardly from respective flexible prongs (46a) extending longitudinally from said base portion (38) of the locking member (7).

7. The flushing tank according to any of the preceding claims, wherein the plate (6) has at least one longitudinal rib (31) projecting from a face (30a) of the plate (6) and extending parallel to the series of notches (29) defining a rail (32) for the locking member (7); the locking member (7) being slidable along the rail (32).

8. The flushing tank according to claim 7, wherein the locking member has at least one elastically deformable clip portion (39a, 39b) shaped so as to clamp the rail (32) and fasten the locking member (7) to the rail (32).

9. The flushing tank according to claim 8, wherein the rib (31) has a rear narrowing (33) along a longitudinal edge joining the rib (31) to the face (30a) of the plate (6); and the clip portion (39a, 39b) has, on respective arms (40a, 40b) defining respective elastic jaws of the clip portion (39a, 39b), a pair of opposite indentations (43) facing and aligned to each other, shaped so as to engage said narrowing (33).

10. The flushing tank according to any of claims from 7 to 9, wherein the locking member (7) is movable with respect to the plate (6) crosswise to the sliding axis (S) for selectively assuming two operation positions: a free position, in which the locking member (7) hooks on the rail (32) by means of the clip portion (39a, 39b) but does not engage the hooking seat (14) on the container (2); and a locked position, in which the locking member (7) is housed through a notch (29) of the plate (6) and engages the hooking seat (14).

11. The flushing tank according to any of the preceding claims, wherein the locking member (7) comprises a base portion (38); and a first clip portion (39a) and a second clip portion (39b) both elastically deformable, which project from the base portion (38) substantially parallel to one another and are spaced apart from one another; the first clip portion (39a) and the second clip portion (39b) comprising a pair of first arms (40a) and, respectively, a pair of second arms (40b) arranged side-by-side and separated by respective longitudinal central slits (41); the first arms (40a) and the second arms (40b) being provided, on respective sides (42) facing one another and delimiting the central slits (41), with respective indentations (43) facing and aligned to each other, shaped so as to engage the narrowing (33) of the rail (32) defined by the rib (31); the first clip portion (39a) being provided with hooking teeth (45), in particular snap-on hooking teeth, shaped so as to engage the hooking seat (14) on the container (2).

12. The flushing tank according to claim 11, wherein each first arm (40a) comprises a laterally outer prong (46a) and a laterally inner prong (46b), arranged side-by-side and separated by a secondary slit (47), parallel to the central slit (41); the laterally outer prongs (46a), which are farther from the central slit (41), being provided with the teeth (45), and the laterally inner prongs (46b), which are closer to the central slit (41), being provided with the indentations (43).

13. The flushing tank according to claim 11 or 12, wherein the locking member (7) is shaped so that the first arms (40a) and the second arms (40b) are insertable in a selected pair of notches (29) of the plate (6) and in the hooking seats (14) positioned on the container (2) behind the selected pair of notches (29).

14. The flushing tank according to any of the preceding claims, wherein the plate (6) is provided with fastening elements (23) for fastening the plate (6) to a support wall, and optionally with at least one support (24) for a pipe (25) or another functional element.

## Patentansprüche

1. Spülkasten (1) für eine Sanitäreinrichtung umfassend einen Behälter (2) und eine einstellbare Montagevorrichtung (3) zur Montage des Behälters (2) an einer Stützwand; wobei die Vorrichtung (3) umfasst: einen Sitz (4), der an einer Wand (5) des Behälters (2) ausgebildet ist; und eine Montageplatte (6), die in den Sitz (4) einsetzbar ist; wobei der Spülkasten (1) **dadurch gekennzeichnet ist, dass** die Montageplatte (6) in dem Sitz (4) entlang einer Gleitachse (S) verschiebbar ist, um die Position der Platte (6) in Bezug auf den Behälter (2) axial zu ändern; und dadurch, dass die Vorrichtung (3) mindestens ein Verriegelungselement (7) umfasst, das derart geformt ist, dass es die Platte (6) und einen an der Wand (5) des Behälters (2) ausgebildeten Einhängesitz (14) miteinander in Eingriff bringt, wodurch die Platte (6) in einer ausgewählten Position in dem Sitz (4) und somit auf einer vorbestimmten Höhe entlang der Gleitachse (S) verriegelt wird.

2. Spülkasten nach Anspruch 1, wobei die Platte (6) mit mindestens einer Reihe von Kerben (29) versehen ist, die entlang einer Achse (B) parallel zur Gleitachse (S) angeordnet sind und mit dem Verriegelungselement (7) zusammenwirken; wobei das Verriegelungselement (7) mindestens einen Arm (40a) aufweist, der von einem Basisabschnitt (38) hervorsteht und derart geformt ist, dass er durch eine ausgewählte Kerbe (29) der Reihe von Kerben (29) eingeführt wird und in den Einhängesitz (14) eingreift.

3. Spülkasten nach Anspruch 2, wobei die Kerben (29) als Schlitze geformt sind, die durch die Platte (6) zwischen einer Vorderseite (30a) und einer Rückseite (30b) der Platte (6) ausgebildet sind und quer zur Achse (B) verlängert sind, entlang welcher sich die Reihe von Kerben (29) erstreckt.

4. Spülkasten nach Anspruch 2 oder 3, wobei die Platte (6) zwei Reihen von Kerben (29) aufweist, die entlang jeweiliger Achsen (B) parallel zueinander und zur Gleitachse (S) ausgerichtet sind und mit jeweiligen Verriegelungselementen (7) zusammenwirken, die in jeweilige Einhängesitze (14) des Behälters (2) eingreifen.

5. Spülkasten nach einem der Ansprüche 2 bis 4, wobei das Verriegelungselement (7) mit einem Paar gegenüberliegender Einhängezähne (45) versehen ist, insbesondere Einschnapp-Einhängezähne, die derart geformt sind, dass sie mit dem Einhängesitz (14) am Behälter (2) in Eingriff kommen.

6. Spülkasten nach Anspruch 5, wobei die Zähne (45) von jeweiligen flexiblen Zinken (46a), die sich in Längsrichtung von dem Basisabschnitt (38) des Verriegelungselements (7) erstrecken, seitlich und nach außen hervorstehen.

7. Spülkasten nach einem der vorhergehenden Ansprüche, wobei die Platte (6) mindestens eine Längsrippe (31) aufweist, die von einer Fläche (30a) der Platte (6) hervorsteht und sich parallel zu der Reihe von Kerben (29) erstreckt, die eine Schiene (32) für das Verriegelungselement (7) definiert; wobei das Verriegelungselement (7) entlang der Schiene (32) verschiebbar ist.

8. Spülkasten nach Anspruch 7, wobei das Verriegelungselement mindestens einen elastisch verformbaren Klammerabschnitt (39a, 39b) aufweist, der derart geformt ist, dass er die Schiene (32) einklemmt und das Verriegelungselement (7) an der Schiene (32) befestigt.

9. Spülkasten nach Anspruch 8, wobei die Rippe (31) eine hintere Verengung (33) entlang einer Längskante aufweist, die die Rippe (31) mit der Fläche (30a) der Platte (6) verbindet; und der Klammerabschnitt (39a, 39b) an jeweiligen Armen (40a, 40b), die jeweilige elastische Backen des Klammerabschnitts (39a, 39b) definieren, ein Paar gegenüberliegender Vertiefungen (43) aufweist, die einander zugewandt und zueinander ausgerichtet sind und derart geformt sind, dass sie in die Verengung (33) eingreifen.

10. Spülkasten nach einem der Ansprüche 7 bis 9, wobei das Verriegelungselement (7) in Bezug auf die Platte (6) quer zur Gleitachse (S) beweglich ist, um wahlweise zwei Betriebspositionen einzunehmen: eine freie Position, in der sich das Verriegelungselement (7) an der Schiene (32) mittels des Klammerabschnitts (39a, 39b) einhängt, jedoch nicht in den Einhängesitz (14) an dem Behälter (2) eingreift; und eine verriegelte Position, in der das Verriegelungselement (7) durch eine Kerbe (29) der Platte (6) aufgenommen ist und in den Einhängesitz (14) eingreift.

11. Spülkasten nach einem der vorhergehenden Ansprüche, wobei das Verriegelungselement (7) einen Basisabschnitt (38) und einen ersten Klammerabschnitt (39a) und einen zweiten Klammerabschnitt (39b) aufweist, die beide elastisch verformbar sind und von dem Basisabschnitt (38) im Wesentlichen parallel zueinander vorstehen und voneinander beabstandet sind; wobei der erste Klammerabschnitt (39a) und der zweite Klammerabschnitt (39b) ein Paar erster Arme (40a) bzw. ein Paar zweiter Arme (40b) umfassen, die nebeneinander angeordnet und durch jeweilige zentrale Längsschlitze (41) getrennt sind; wobei die ersten Arme (40a) und die zweiten Arme (40b) auf einander zugewandten Seiten (42) bereitgestellt sind und die zentralen Schlitze (41) begrenzen, wobei die jeweiligen Vertiefungen (43) einander zugewandt und zueinander ausgerichtet sind und derart geformt sind, dass sie die Verengung (33) der durch die Rippe (31) definierten Schiene (32) in Eingriff bringen; wobei der erste Klammerabschnitt (39a) mit Einhängezähnen (45), insbesondere Einschnapp-Einhängezähnen versehen ist, die derart geformt sind, dass sie den Einhängesitz (14) am Behälter (2) in Eingriff bringen.

12. Spülkasten nach Anspruch 11, wobei jeder erste Arm (40a) eine seitlich äußere Zinke (46a) und eine seitlich innere Zinke (46b) umfasst, die nebeneinander und durch einen sekundären Schlitz (47) parallel zu dem zentralen Schlitz (41) angeordnet sind; wobei die seitlich äußeren Zinken (46a), die weiter vom zentralen Schlitz (41) entfernt sind, mit den Zähnen (45) versehen sind, und die seitlich inneren Zinken (46b), die sich näher am zentralen Schlitz (41) befinden, mit den Vertiefungen (43) versehen sind.

13. Spülkasten nach Anspruch 11 oder 12, wobei das Verriegelungselement (7) derart geformt ist, dass die ersten Arme (40a) und die zweiten Arme (40b) in ein ausgewähltes Paar von Kerben (29) der Platte (6) und in den Einhängesitzen (14) einsetzbar sind, die sich am Behälter (2) hinter dem ausgewählten Paar Kerben (29) befinden.

14. Spülkasten nach einem der vorhergehenden Ansprüche, wobei die Platte (6) mit Befestigungselementen (23) zum Befestigen der Platte (6) an einer Stützwand und gegebenenfalls mit mindestens einer Halterung (24) für ein Rohr (25) oder ein anderes Funktionselement versehen ist.

## Revendications

1. Réservoir de rinçage (1) destiné à un appareil sanitaire, comprenant un récipient(2) et un dispositif de montage réglable (3) destiné à placer le récipient (2) sur une paroi de support, le dispositif (3) comprenant un siège (4) formé sur une paroi (5) du récipient (2) et une plaque de montage (6) qui peut être insérée dans le siège (4), le réservoir de rinçage (1) étant **caractérisé en ce que** la plaque de montage (6) peut coulisser dans le siège (4) le long d'un axe de coulissement (S) de façon à modifier axialement la position de la plaque (6) par rapport au récipient (2), et **en ce que** le dispositif (3) comprend au moins un élément de verrouillage (7) configuré de façon à engager ensemble la plaque (6) et un siège d'accrochage (14) formé sur la paroi (5) du récipient (2), verrouillant ainsi la plaque (6) dans une position choisie sur le siège (4) et, par conséquent, à une hauteur prédéterminée le long de l'axe de coulissement (S).

2. Réservoir de rinçage selon la revendication 1, **caractérisé en ce que** la plaque (6) est munie d'au moins une série d'encoches (29) prévues le long d'un axe (B) parallèle à l'axe de coulissement (S) et qui coopère avec l'élément de verrouillage (7), l'élément de verrouillage (7) ayant au moins un bras (40a) qui dépasse d'une partie de base (38) et configuré de façon à être inséré dans une encoche sélectionnée (29) de la série d'encoches (29) et à engager le siège d'accrochage (14).

3. Réservoir de rinçage selon la revendication 2, **caractérisé en ce que** les encoches (29) sont configurées comme des fentes formées dans la plaque (6) entre une face avant (30a) et une face arrière (30b) de la plaque (6) et sont allongées transversalement par rapport audit axe (B) le long duquel la série d'encoches (29) s'étend.

4. Réservoir de rinçage selon la revendication 2 ou 3, **caractérisé en ce que** la plaque (6) possède deux séries d'encoches (29) alignées le long d'axes respectifs (B) parallèles les uns aux autres et à l'axe de coulissement (S) et qui coopèrent avec les éléments de verrouillage respectifs (7) qui engagent les sièges d'accrochage respectifs (14) du récipient(2).

5. Réservoir de rinçage selon l'une quelconque des revendications 2 à 4, **caractérisé en ce que** l'élément de verrouillage (7) est muni d'une paire de dents d'accrochage opposées (45), et en particulier de dents d'accrochage enclipsées, configurées de façon à engager le siège d'accrochage (14) sur le récipient (2).

6. Réservoir de rinçage selon la revendication 5, **caractérisé en ce que** les dents (45) se projettent latéralement et vers l'extérieur depuis des broches flexibles respectives (46a) qui s'étendent longitudinalement depuis ladite partie de base (38) de l'élément de verrouillage (7).

7. Réservoir de rinçage selon l'une quelconque des revendications précédentes, **caractérisé en ce que** la plaque (6) possède au moins une nervure longitudinale (31) qui se projette depuis une face (30a) de la plaque (6) et qui s'étend parallèlement à la série d'encoches (29) en définissant un rail (32) destiné à l'élément de verrouillage (7), l'élément de verrouillage (7) pouvant coulisser le long du rail (32).

8. Réservoir de rinçage selon la revendication 7, **caractérisé en ce que** l'élément de verrouillage possède au moins une partie de fixation élastiquement déformable (39a, 39b) configurée de façon à fixer le rail (32) et à fixer l'élément de verrouillage (7) sur le rail (32).

9. Réservoir de rinçage selon la revendication 8, **caractérisé en ce que** la nervure (31) possède un rétrécissement arrière (33) le long d'un bord longitudinal qui joint la nervure (31) à la face (30a) de la plaque (6), la partie de fixation (39a, 39b) possédant, sur des bras respectifs (40a, 40b) qui définissent des mâchoires élastiques respectives de la partie de fixation (39a, 39b), une paire d'indentations opposées (43) qui se font face et sont alignées les unes avec les autres, et configurées de façon à engager ledit rétrécissement (33).

10. Réservoir de rinçage selon l'une quelconque des revendications 7 à 9, **caractérisé en ce que** l'élément de verrouillage (7) peut se déplacer par rapport à la plaque (6) transversalement par rapport à l'axe de coulissement (S) afin d'adopter sélectivement deux positions de fonctionnement : une position libre, dans laquelle l'élément de verrouillage (7) s'accroche sur le rail (32) à l'aide de la partie de fixation (39a, 39b) mais n'engage pas le siège d'accrochage (14) sur le récipient (2), et une position verrouillée, dans laquelle l'élément de verrouillage (7) est placé dans une encoche (29) de la plaque (6) et engage le siège d'accrochage (14).

11. Réservoir de rinçage selon l'une quelconque des revendications précédentes, **caractérisé en ce que** l'élément de verrouillage (7) comprend une partie de base (38), une première partie de fixation (39a) et une seconde partie de fixation (39b) élastiquement déformables, qui se projettent depuis la partie de base (38) de manière sensiblement parallèle l'une à l'autre et sont espacées l'une de l'autre, la première partie de fixation (39a) et la seconde partie de fixation (39b) comprenant une paire de premiers bras (40a) et, respectivement, une paire de seconds bras (40b) disposés côte à côte et séparés par des fentes centrales longitudinales respectives (41), les premiers bras (40a) et les seconds bras (40b) étant munis, sur les bords respectifs (42) qui se font face et qui délimitent les fentes centrales (41), d'indentations respectives (43) qui se font face et sont alignées les unes avec les autres, configurées de façon à engager le rétrécissement (33) du rail (32) défini par la nervure (31), la première partie de fixation (39a) étant munie de dents d'accrochage (45), et en particulier de dents d'accrochage enclipsées, configurées de façon à engager le siège d'accrochage (14) sur le récipient(2).

12. Réservoir de rinçage selon la revendication 11, **caractérisé en ce que** chaque premier bras (40a) comprend une broche latéralement externe (46a) et une broche latéralement interne (46b), prévues côte à côte et séparées par une fente secondaire (47), parallèle à la fente centrale (41), les broches latéralement externes (46a), qui sont plus éloignées de la fente centrale (41), étant munies des dents (45), et les broches latéralement internes (46b), qui sont plus proches de la fente centrale (41), étant munies des indentations (43).

13. Réservoir de rinçage selon la revendication 11 ou 12, **caractérisé en ce que** l'élément de verrouillage (7) est configuré de sorte que les premiers bras (40a) et les seconds bras (40b) puissent être insérés dans une paire sélectionnée d'encoches (29) de la plaque (6) et dans les sièges d'accrochage (14) positionnés sur le récipient(2) derrière la paire sélectionnée d'encoches (29).

14. Réservoir de rinçage selon l'une quelconque des revendications précédentes, **caractérisé en ce que** la plaque (6) est munie d'éléments de fixation (23) destinés à fixer la plaque (6) sur une paroi de support, et optionnellement d'au moins un support (24) destiné à un conduit (25) ou un autre élément fonctionnel.
